# EUROPÄISCHE PATENTANMELDUNG

(11) **EP 0 807 636 A1**
(43) Veröffentlichungstag der Anmeldung: **19.11.1997**
(21) Anmeldenummer: 97107498.4
(22) Anmeldetag: 07.05.1997
(51) Int. Cl.: C07F 9/50

(54) **Substituierte Diphosphine und ein Verfahren zu ihrer Herstellung**

(30) Priorität: 15.05.1996 DE 19619528
(71) Anmelder: HOECHST AKTIENGESELLSCHAFT, 65926 Frankfurt am Main (DE)
(72) Erfinder: Bahrmann, Helmut, Dr., 46499 Hamminkeln (DE); Lappe, Peter, Dr., Plano, TX 75025 (US); Müller, Thomas, 4635 Dinslaken (DE)

(57) **Zusammenfassung**

Die Erfindung betrifft neue Diphosphine, die als Ammoniumcarboxylate, -sulfonate oder -phosphonate mit ein- bzw. mehrfach geladenem Diphosphin-Anion und der korrespondierenden Anzahl Ammonium-Kationen als Gegenionen vorliegen sowie ein Verfahren zu ihrer Herstellung.

## Beschreibung

Phosphine werden in den verschiedensten industriell ausgeübten Verfahren eingesetzt. Von Bedeutung ist besonders ihr Einsatz als Liganden für Metallkomplexkatalysatoren, die als Zentralatom bevorzugt ein Metall der VIII. Gruppe des Periodensystems der Elemente sowie gegebenenfalls neben den Phosphin-Liganden noch weitere, zur Komplexbildung fähige Gruppen enthalten.

Die technisch in großem Umfang durchgeführte Hydroformylierung von Olefinen erfolgt zunehmend in Gegenwart von Katalysatorsystemen auf der Basis von Rhodium-Komplexverbindungen, die tertiäre Phosphine oder Phosphite als Liganden enthalten. Da diese Liganden in der Regel im Überschuß vorliegen, besteht das Katalysatorsystem aus Komplexverbindung und zusätzlichem reinem Ligand. Entsprechend der Löslichkeit dieser Katalysatorsysteme in organischen Medien erfolgt die Hydroformylierung in homogener Phase. Zur Abtrennung der Reaktionsprodukte und Wiedergewinnung der im Reaktionsprodukt homogen gelösten Katalysatoren destilliert man das Reaktionsprodukt im allgemeinen aus dem Reaktionsgemisch ab. Dies ist aber wegen der thermischen Empfindlichkeit der gebildeten Aldehyde nur bei der Hydroformylierung von niederen Olefinen mit bis zu etwa 8 Kohlenstoffatomen im Molekül möglich. Bei der Hydroformylierung langkettiger Olefine oder olefinischer Verbindungen mit funktionellen Gruppen werden Produkte mit hohem Siedepunkt gebildet, die sich destillativ nicht mehr zufriedenstellend vom Katalysator abtrennen lassen: Die thermische Belastung des Destillationsgutes führt durch Dickölbildung zu erheblichen Verlusten an Wertprodukt sowie durch Zersetzung der Komplexverbindungen zu Verlusten an Katalysator. Hierdurch wird die wirtschaftliche Attraktivität des Verfahrens entscheidend verringert.

Aus EP-A-0 374 615 ist es bekannt, daß sich metallorganische Komplexverbindungen, die Phosphor(III)verbindungen als Liganden enthalten, aus organischen Lösungsmitteln unter Einsatz selektiver semipermeabler Polyamid-Trennmembranen unversehrt, d.h. ohne Abbau der katalytisch aktiven Metallverbindung, abtrennen und zurückgewinnen lassen. Als treibende Kraft für den Trennvorgang kann hierbei sowohl eine Druckdifferenz (Druckfiltration) als auch eine Konzentrationsdifferenz (Dialyse) dienen. Das Verfahren eignet sich besonders zur Abtrennung von metallorganischen Komplexverbindungen und/oder Metallcarbonylen mit Phosphor(III)verbindungen als Liganden aus organischen Lösungen, in denen sie zuvor Anwendung als homogene Katalysatoren gefunden haben. Als Rhodiumkomplexverbindungen sind in EP-A-0 374 615 HRhCO[P(C₆H₅)₃]₃, RhCl[P(C₆H₅)₃]₃ und solche Verbindungen genannt, die als Liganden Alkyl- oder Arylammoniumsalze sulfonierter oder carboxylierter Triarylphosphine der allgemeinen Formel 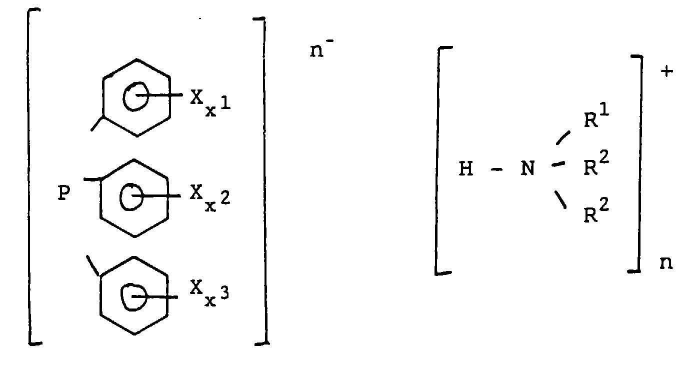 enthalten, wobei X einen Sulfonatrest(-SO₃⁻) oder Carboxylatrest(-COO⁻) bedeutet, x¹, x² und x³ 0 oder 1 sind, R¹ und R² jeweils gleiche oder verschiedene C₄ - C₁₂-Alkylreste, C₆ - C₁₂-Arylreste oder C₆ - C₁₂-Cycloalkylreste bedeuten und R¹ zusätzlich auch für Wasserstoff stehen kann.

Derartige Rhodiumkomplexverbindungen mit Alkyl- oder Arylammoniumsalzen sulfonierter oder carboxylierter Triarylphosphine als Liganden werden zur Hydroformylierung olefinisch ungesättigter Verbindungen in homogener Phase eingesetzt, benötigen aber zu ihrer Stabilisierung einen großen Überschuß an freien, nicht komplexierten Liganden.

Dieser große Ligandenüberschuß führt im Hydroformylierungsgemisch zu einer hohen Salzkonzentration, die die Umsetzung des Olefins mit Kohlenmonoxid und Wasserstoff ungünstig beeinflussen kann, da sie die Löslichkeit der Reaktionspartner im Reaktionsgemisch beeinträchtigt und zudem eine Schaumbildung fördert. Auch bei einer Membranfiltration, die nach der Hydroformylierung zur Abtrennung des Katalysatorsystems vom Reaktionsprodukt durchgeführt werden kann, wirkt sich der große Ligandenüberschuß, d.h. die hohe Salzkonzentration, negativ aus; zum einen verringert sie die Flußleistung der Membranfiltration, was nur durch die Verwendung von sehr viel größeren Membranflächen wieder ausgeglichen werden kann, zum anderen verringert sie den maximalen Grad der Aufkonzentration des Retentats. Dies führt bei einer Rezirkulierung des katalysatorhaltigen Retentats in die Hydroformylierungsreaktion zu einer Reduzierung des für die übrigen Reaktanden zur Verfügung stehenden Reaktorvolumens, ein Effekt, der ebenso wie die großen Membranflächen erhöhte Verfahrenskosten bedingt und damit die wirtschaftliche Attraktivität des Verfahrens mindert.

Auch im Falle einer destillativen Aufarbeitung des Hydroformylierungsgemisches sind die hohen Salzkonzentrationen störend, da sie zu einem erhöhten Anteil an salzhaltigem Dicköl führen.

Es bestand daher die Aufgabe, neue phosphororganische Verbindungen zur Verfügung zu stellen, die als Liganden in Katalysatorsystemen auf der Basis von Rhodium-Komplexverbindungen bei der Hydroformylierung von olefinisch ungesättigten Verbindungen in homogener Phase eingesetzt werden können, hierbei zu hohen Aktivitäts- und Selektivitätswerten führen und eine einfache Abtrennung des Katalysatorsystems vom Hydroformylierungsprodukt ermöglichen.

Gelöst wird diese Aufgabe durch Verbindungen der allgemeinen Formel I 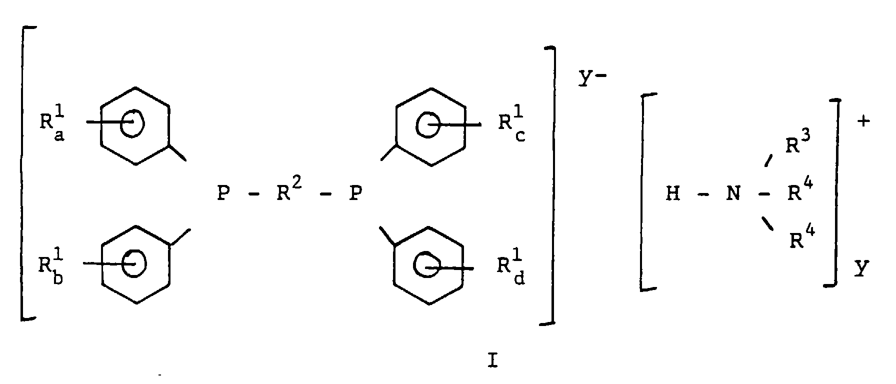 worin R¹ einen Carboxylat-(COO⁻), Sulfonat-(SO₃⁻), Phosphonat-(PO₃²⁻) oder 2-Aminoethanbisphosphonat-Rest ⁅NH-CH₂-CH(PO₃²⁻)₂] darstellt, R² für einen geradkettigen Alkylenrest mit 1 - 8 Kohlenstoffatomen, einen Sauerstoff enthaltenden Alkylenrest mit 2 - 6 Kohlenstoffatomen, einen Cycloalkylenrest mit 3 bis 10 Kohlenstoffatomen oder einen Rest der Formeln II, III, IV oder V 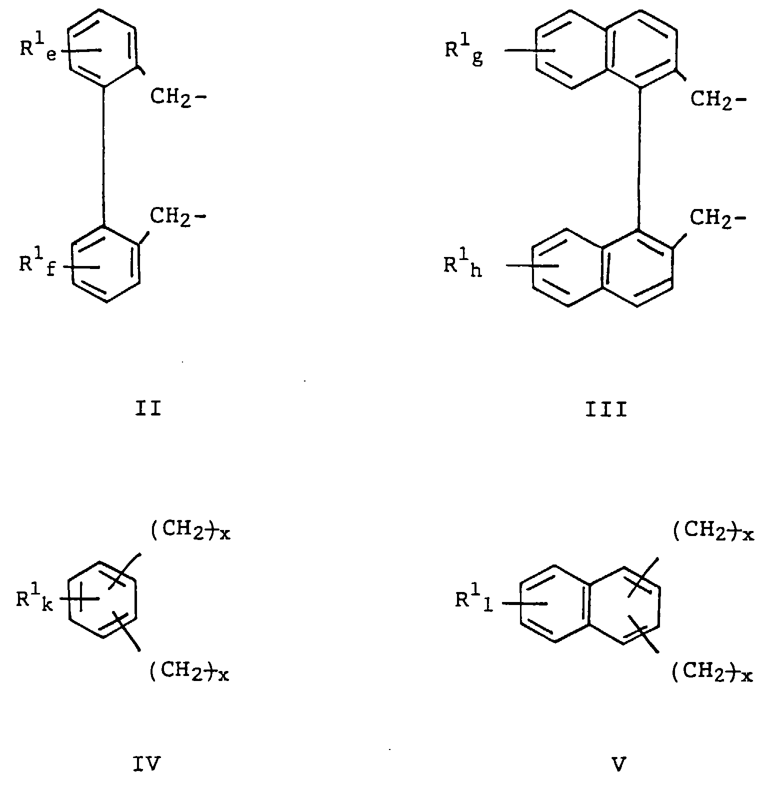 steht, a, b, c, d, e, f, g, h, k und l gleich oder verschieden und 0 oder 1 sind, wobei mindestens einer der Parameter a, b, c, d, e, f, g, h, k oder l gleich 1 sein muß, x gleich oder verschieden und 0 oder 1 ist, R³ und R⁴ gleich oder verschieden sind und für C₄ - C₂₆-Alkyl-, substituierte oder unsubstituierte C₆ - C₁₀-Aryl- oder C₆ - C₁₀-Cycloalkylreste oder einen Benzylrest stehen und R³ auch Wasserstoff bedeuten kann.

Die Verbindungen der allgemeinen Formel I liegen als Ammoniumcarboxylate, -sulfonate oder -phosphonate mit ein- bzw. mehrfach geladenem Diphosphin-Anion und der korrespondierenden Anzahl Ammonium-Kationen als Gegenionen vor. Sie sind in Wasser im allgemeinen nicht oder nur in sehr geringem Maß löslich. In organischen Lösungsmitteln besitzen sie dagegen eine gute bis sehr gute Löslichkeit und eignen sich daher für den Einsatz in organischer Phase.

In der allgemeinen Formel I bedeutet R¹ einen Carboxylat-, Sulfonat-, Phosphonat- oder 2-Aminoethanbisphosphonatrest, bevorzugt einen Sulfonatrest.

R² steht für einen geradkettigen Alkylenrest mit 1 - 8, bevorzugt 1 - 5 und insbesondere 1 - 3 Kohlenstoffatomen. R² kann ferner einen Sauerstoff enthaltenden Alkylenrest mit 2 - 6, bevorzugt mit 2 - 4 Kohlenstoffatomen und insbesondere mit 4 Kohlenstoffatomen gemäß der Formel (̵CH₂)̵₂O(̵CH₂)̵₂ darstellen. R² steht ebenfalls für einen Cycloalkylenrest mit 3 - 10, bevorzugt 6 - 10 Kohlenstoffatomen oder für einen Rest der Formeln II, III, IV oder V, bevorzugt der Formel II.

In den allgemeinen Formeln I, II, III, IV und V sind a, b, c, d, e, f, g, h, k und l gleich oder verschieden und 0 oder 1, wobei mindestens einer der Parameter a, b, c, d, e, f, g, h, k oder l gleich 1 sein muß. In Verbindungen der Formel I, in denen R² einen Rest der Formel II darstellt, ist die Summe aus a, b, c, d, e und f, welche die Zahl der Reste R¹ angibt, bevorzugt 1 - 3; ist R² ein Rest der Formel III, so stellt die Summe aus a, b, c, d, g und h bevorzugt eine Zahl von 1 - 2 dar. Ist R² ein Rest der Formel IV oder V, so ist die Summe aus a, b, c, d und k bzw. a, b, c, d und l bevorzugt 1 - 3. Hat R² die Bedeutung eines geradkettigen Alkylenrestes mit 1 - 8 Kohlenstoffatomen, eines Sauerstoff enthaltenden Alkylenrests mit 2 - 6 Kohlenstoffatomen oder eines Cycloalkylenrestes mit 3 - 10 Kohlenstoffatomen, so ist die Summe aus a, b, c und d bevorzugt eine Zahl von 2 - 4.

In den Formeln IV und V ist x bevorzugt 1, und die beiden Methylenreste stehen in ortho-Stellung zueinander.

In der allgemeinen Formel I sind R³ und R⁴ gleich oder verschieden und stehen für C₄ - C₂₆-, bevorzugt C₁₈ - C₂₂-Alkyl-, substituierte oder unsubstituierte C₆ - C₁₀-Aryl, bevorzugt Phenyl-, C₆ - C₁₀-Cycloalkyl-, bevorzugt Cyclohexylreste oder einen Benzylrest. R³ kann auch Wasserstoff bedeuten. Somit leiten sich die Ammonium-Kationen [H-NR³R⁴R⁴]⁺ in der allgemeinen Formel I von sekundären oder tertiären Aminen NR³R⁴R⁴ ab, die insgesamt 8 - 78, bevorzugt 12 - 72, besonders bevorzugt 21 bis 60 und insbesondere 36 bis 54 Kohlenstoffatome in den Substituenten R³ und R⁴ enthalten. Bevorzugt leiten sich die Ammonium-Kationen von Di-2-ethylhexylamin, Tri-n-octylamin, Triisooctylamin, Triisononylamin, Triisodecylamin, Distearylamin, Methyldistearylamin, Tricetylamin oder Trieicosylamin ab.

Als besonders geeignete Diphosphin-Anionen in der allgemeinen Formel I seien sulfonierte Diphosphin-Anionen wie
Bis(disulfonatophenylphosphino)methan
1,2-Bis(disulfonatophenylphosphino)ethan
1,3-Bis(disulfonatophenylphosphino)propan
1,4-Bis(disulfonatophenylphosphino)butan
1,5-Bis(disulfonatophenylphosphino)pentan
Bis-(diphenylphosphinomethyl)ether
Bis-(diphenylphosphinoethyl)ether
genannt.

Ein weiterer Gegenstand der Erfindung ist ein Verfahren zur Herstellung der Verbindungen der allgemeinen Formel I, wobei R¹ ein Sulfonatrest ist, dadurch gekennzeichnet, daß man das sekundäre Phosphinoxid der Formel VI 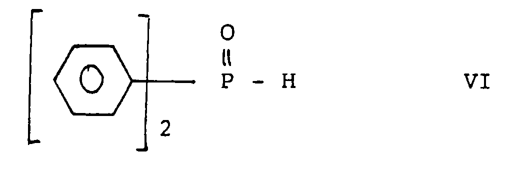 in Gegenwart einer Base mit einem Dihalogenid der Formel VII

X - R² - X VII

worin R² die in der Formel I genannten Bedeutungen hat und X für einen Halogenrest, bevorzugt Chlor oder Brom steht, gegebenenfalls in Anwesenheit eines Lösungsmittels bei -20 bis 100°C zu einem Diphosphinoxid der Formel VIII 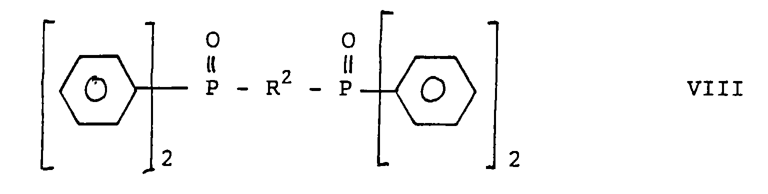 umsetzt, dieses Diphosphinoxid der Formel VIII gegebenenfalls in Gegenwart eines Lösungsmittels mit einem Silan der Formel HSiClₘR⁵ₙ, wobei m gleich 2 oder 3 ist, n gleich 0 oder 1 ist, m + n gleich 3 ist und R⁵ für einen Methyl- oder Phenylrest steht, bei 80 - 160°C zu einem Diphosphin der Formel IX 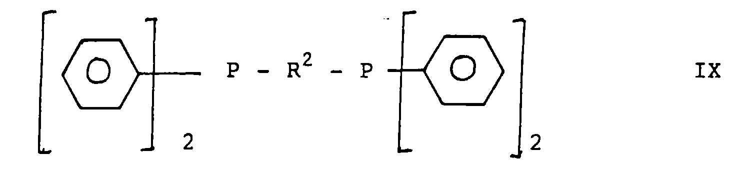 reduziert und dieses Diphosphin der Formel IX bei 0 bis 50°C mit Oleum sulfoniert, das Sulfonierungsgemisch mit Wasser verdünnt und das in einem wasserunlöslichen organischen Lösungsmittel gelöste wasserunlösliche Amin NR³R⁴R⁴, von dem sich das Ammonium-Kation [H-NR³R⁴R⁴]⁺ in Formel I ableitet, zugibt.

Die Umsetzung des Phosphinoxids der Formel VI mit dem Dihalogenid X-R²-X erfolgt im Molverhältnis 1 : (2-3), bevorzugt 1 : 2,5. Bei dieser Umsetzung arbeitet man in Gegenwart einer Base, um den bei dieser Reaktion freiwerdenden Halogenwasserstoff, HCl bzw. HBr, zu binden. Als Base kann man eine Verbindung MeH, worin Me für Li, Na oder K steht, oder eine Verbindung LiR', worin R' für einen Alkylrest mit 1 bis 4 Kohlenstoffatomen oder einen Phenylrest steht, einsetzen. Es sind auch Gemische der vorstehend aufgeführten Basen verwendbar.

Das Diphosphinoxid der Formel VIII wird anschließend gegebenenfalls in Anwesenheit eines Lösungsmittels mit einem Silan der Formel HSiClₘR⁵ₙ, worin m und n die vorstehenden Bedeutungen haben, insbesondere mit einem Silan der Formel HSiCl₂R⁵, worin R⁵ für einen Methylrest oder Phenylrest steht, bei einer Temperatur von 100 bis 150°C reduziert. Man kann diese Reduktion auch bei höheren und tieferen Temperaturen durchführen, es hat sich jedoch für eine Vielzahl von Fällen der Temperaturbereich von 100 bis 150°C als zweckmäßig und ausreichend erwiesen. Man führt die Reduktion des Diphosphinoxids der Formel VIII vorzugsweise in Anwesenheit eines Lösungsmittels durch. Üblicherweise verwendet man hierfür ein organisches Lösungsmittel, das sich unter den Bedingungen der Reduktion inert verhält, z.B. Acetonitril, Toluol oder Xylol. Nach der Reduktion des Diphosphinoxids der Formel VIII erhält man das Diphosphin der Formel IX.

Zur Einführung von Sulfonsäuregruppen in die Phenylreste und die gegebenenfalls im Rest R² vorhandenen Binaphthylreste des Diphosphins der Formel IX behandelt man das Diphosphin mit überschüssigem Schwefeltrioxid in Form von Oleum als Sulfonierungsmittel. Maßgebend für den erzielbaren Sulfonierungsgrad sind insbesondere die SO₃-Konzentration im Oleum, die Reaktionstemperatur und die Reaktionszeit. Die genannten Parameter beeinflussen sich gegenseitig. Üblicherweise wird Oleum eingesetzt, das 10 bis 65 aber auch mehr Gew.-% Schwefeltrioxid enthält. Besonders bewährt hat sich Oleum, welches 25 Gew.-% Schwefeltrioxid enthält. Das Sulfonierungsmittel ist, bezogen auf das Diphosphin, im Überschuß anzuwenden. Zweckmäßig setzt man je mol Diphosphin 5 bis 80, vorzugsweise 15 bis 30 mol SO₃ ein. Oleum mit freiem SO₃ in hoher Konzentration, d.h. einem Anteil von etwa 40 bis 65 und mehr Gew.-% verwendet man bei Diphosphinen der Formel IX, in denen R² einen geradkettigen Alkylenrest mit 1 - 8 Kohlenstoffatomen, einen Sauerstoff enthaltenden Alkylenrest mit 2 - 6 Kohlenstoffatomen oder einen Cycloalkylenrest mit 3 - 10 Kohlenstoffatomen darstellt. Man erhält dann Produkte, die 2 - 4 und gegebenenfalls mehr Sulfonat-Gruppen enthalten. Konzentrationen von freiem SO₃ in Oleum, die niedriger als etwa 40 Gew.-% sind, verwendet man bei Diphosphinen der Formel IX, in der R² einen Rest der Formeln II, III, IV oder V darstellt, und erhält niedriger sulfonierte Produkte mit 1 - 3 Sulfonat-Gruppen.

Die Reaktionstemperatur beträgt 0 bis 50°C, vorzugsweise 10 bis 40°C. Grundsätzlich können auch höhere Temperaturen angewandt werden, sie fördern jedoch die Oxidation der Diphosphine zu Phosphinoxiden wesentlich stärker als die Sulfonierung, so daß insgesamt die Ausbeute an sulfonierten Diphosphinen abnimmt. Daher empfiehlt es sich auch nicht, niedrige Konzentrationen an freiem SO₃ durch Erhöhung der Reaktionstemperatur zu kompensieren.

Es gelingt dagegen, den Sulfonierungsgrad des Diphosphins durch die Reaktionszeit zu beeinflussen. Längere Reaktionszeiten führen zu höher sulfonierten Verbindungen als kürzere. Zweckmäßigerweise richtet sich der Sulfonierungsgrad nach der sterischen Raumbeanspruchung des resultierenden Liganden. Bei einfach aufgebauten Verbindungen der Formel I, wenn R² z.B. einen geradkettigten Alkylenrest mit 1 - 8 Kohlenstoffatomen darstellt, wird ein höherer Sulfonierungsgrad von 2 - 4 angestrebt; bei sterisch anspruchsvolleren Verbindungen der Formel I z.B. mit einem Rest R² der Formel III wird dagegen nur ein geringerer Sulfonierunsgrad von 1 - 2 angestrebt. Im allgemeinen erfordert die Umsetzung in den genannten Temperaturbereichen 1 bis 80 h, vorzugsweise 6 bis 72 h und insbesondere 10 - 60 h. Dieser Zeitrahmen gilt insbesondere bei Anwendung von Oleum, das etwa 40 und mehr Gew.-% freies Schwefeltrioxid enthält. Niedriger konzentriertes Oleum führt auch bei langen Reaktionszeiten nur zu partiell sulfonierten Verbindungen, überdies läßt sich die zunehmende Bildung von Oxidationsprodukten nicht völlig vermeiden. Zweckmäßigerweise steuert man den Sulfonierungsgrad auch über die Reaktionszeit.

Als Lösungsmittel für die zu sulfonierende Ausgangsverbindung hat sich konzentrierte Schwefelsäure bewährt. Diese Lösung kann anteilsweise in Oleum eingetragen oder anteilsweise mit Oleum versetzt werden. Es empfiehlt sich, das Reaktionsgemisch intensiv zu rühren, gut zu kühlen und die Reaktanten langsam und in kleinen Anteilen zusammenzuführen, so daß die Reaktionswärme ohne Mühe abgeführt werden kann. Dadurch erreicht man, daß die Sulfonierung nicht unkontrolliert abläuft, sondern in die Phenylreste und gegebenenfalls Binaphthylreste nacheinander Sulfonat-Gruppen eintreten. Überdies wird eine Oxidation der Phosphorverbindung wirksam unterbunden. Nach Zusatz des gesamten Sulfonierungsmittels bzw. Diphosphins kann die Nachreaktion bei Raumtemperatur, d.h. bei etwa 20 bis 25°C und im wesentlichen ohne äußere Kühlung erfolgen. Es ist jedoch zweckmäßig, das Reaktionsgemisch auch in diesem Stadium zu rühren, um gegebenenfalls noch auftretende Reaktionswärme gleichmäßig zu verteilen und ohne Verzögerung abführen zu können.

Im Anschluß an die Sulfonierung wird die Reaktionslösung hydrolysiert. Bei diesem Verfahrensschritt ist darauf zu achten, daß eine Temperatur von etwa 30°C nicht überschritten wird; vorteilhaft ist es, Temperaturen im Bereich von 15 bis 25°C einzuhalten. Es empfiehlt sich daher, das Umsetzungsgemisch vorsichtig auf Eis zu geben oder die Hydrolyse mit Eis oder Eiswasser durchzuführen und für intensive Außenkühlung zu sorgen. Hierbei wird geraten, soviel Wasser zuzugeben, wie zur Verdünnung der vorhandenen Schwefelsäure auf 0,5 - 50 Gew.-%, vorzugsweise 25 - 35 Gew.-% nötig ist.

Zu der verdünnten Lösung, die im wesentlichen das Sulfonierungsgemisch des Diphosphins und Schwefelsäure enthält, gibt man das in einem wasserunlöslichen organischen Lösungsmittel gelöste wasserunlösliche Amin, von dem sich das Ammonium-Kation [H-NR³R⁴R⁴]⁺ in der allgemeinen Formel I ableitet. Die Amin-Lösung enthält 0,5 - 35 Gew.-%, vorzugsweise 10 - 30 Gew.-% und insbesondere 15 - 25 Gew.-% Amin.

Je Äquivalent Sulfonsäurereste verwendet man 0,5 - 1,5 mol, bevorzugt 0,8 - 1,2 mol Amin. Der Einsatz überschüssigen Amins stellt sicher, daß nur geringe Ausbeuteverluste eintreten. Ein noch höherer Aminüberschuß ist zwar möglich, führt jedoch nicht zu einer weiteren Verbesserung der Ausbeute. Als Amine werden die bereits genannten sekundären oder tertiären Amine eingesetzt.

Als Lösungsmittel für das Amin werden aliphatische oder aromatische Kohlenwasserstoffe oder Kohlenwasserstoffgemische, z.B. Toluol oder kerosinähnliche Kohlenwasserstofffraktionen sowie auch C₄ - C₂₀-Alkohole oder C₈ - C₂₀-Ether verwendet.

Aufgrund des Einbaus zweier trivalenter Phosphor-Atome in das Molekül lassen sich die Verbindungen der allgemeinen Formel I hervorragend als chelatbildende Liganden verwenden. Insbesondere sind sie ausgezeichnet als Bestandteil von Katalysatorsystemen einsetzbar, z.B. für die Hydroformylierung von olefinisch ungesättigten Verbindungen. Dies ist Gegenstand einer am gleichen Tag wie die vorliegende Patentanmeldung eingereichten deutschen Patentanmeldung mit dem Aktenzeichen 196 19 527.6.

### Beispiele

### Herstellung des Distearylammoniumsalzes von 1,3-Bis(di-m-sulfonatophenylphosphino)propan (Ligand 1).

1,3-Bis(diphenylphosphino)propan wird mit Oleum sulfoniert und das erhaltene Reaktionsgemisch durch Zusatz von kaltem Wasser hydrolysiert. Die P(III)Konzentration des Hydrolysegemischs beträgt 42 mmol/kg. 460,6 g des Hydrolysegemisches werden in einem Rührkolben vorgelegt. Anschließend fügt man eine Lösung von 96,6 g Distearylamin in 386 g Toluol hinzu und rührt 60 Minuten bei 50°C. Nach Beendigung des Rührens wird die Schwefelsäure enthaltende Wasserphase abgetrennt. Durch Zusatz von 5 %iger wäßriger Natronlauge wird bei 45°C ein pH-Wert von 2,6 eingestellt. Man läßt 20 min nachreagieren. Zur besseren Phasentrennung werden anschließend 129 g Toluol zugegeben. Nach 30 min erhält man 662,9 g einer organischen Phase, die das Ammoniumsalz des Liganden 1 enthält. Es errechnet sich ein PIII-Übergang in die organische Phase von 78,9 %, bezogen auf den Einsatz.

## Patentansprüche

1. Verbindungen der allgemeinen Formel I 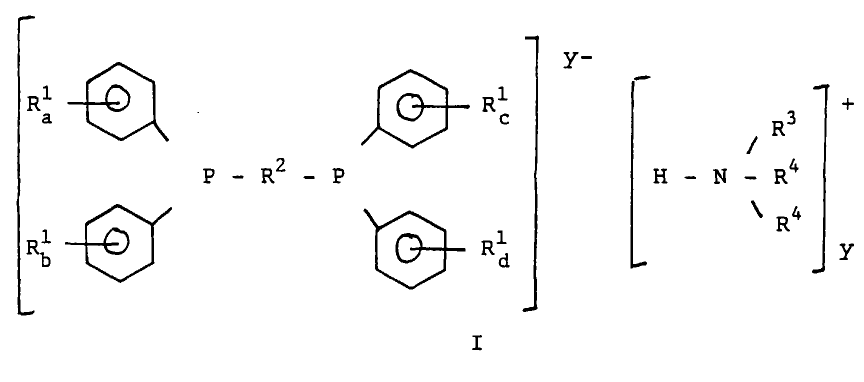 worin R¹ einen Carboxylat-(-COO⁻), Sulfonat-(-SO₃⁻), Phosphonat-(-PO₃²⁻) oder 2-Aminoethanbisphosphonat-Rest ⁅NH-CH₂-CH(PO₃²⁻)₂] darstellt, R² für einen geradkettigen Alkylenrest mit 1 - 8 Kohlenstoffatomen, einen Sauerstoff enthaltenden Alkylenrest mit 2 - 6 Kohlenstoffatomen, einen Cycloalkylenrest mit 3 bis 10 Kohlenstoffatomen oder einen Rest der Formeln II, III, IV oder V 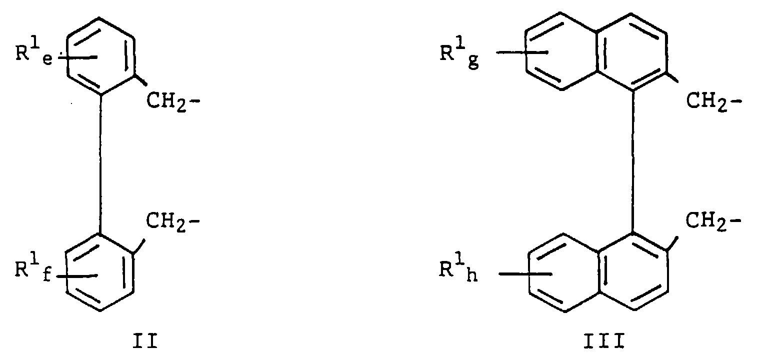 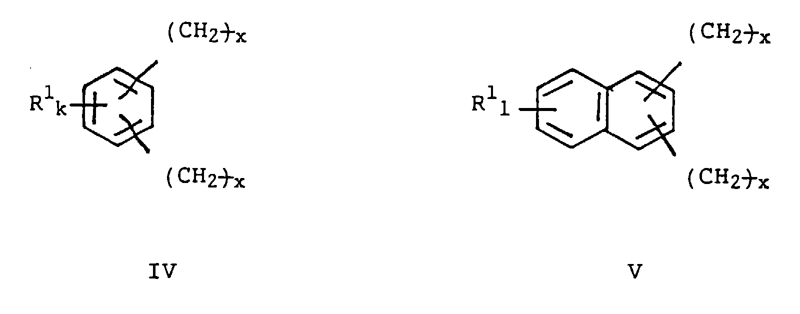 steht, a, b, c, d, e, f, g, h, k und l gleich oder verschieden und 0 oder 1 sind, wobei mindestens einer der Parameter a, b, c, d, e, f, g, h, k oder l gleich 1 sein muß, x gleich oder verschieden und 0 oder 1 ist, R³ und R⁴ gleich oder verschieden sind und für C₄ - C₂₆-Alkyl-, substituierte oder unsubstituierte C₆ - C₁₀-Aryl- oder C₆ - C₁₀-Cycloalkylreste oder einen Benzylrest stehen und R³ auch Wasserstoff bedeuten kann.

2. Verbindungen nach Anspruch 1, dadurch gekennzeichnet, daß R¹ für einen Sulfonatrest steht.

3. Verbindungen nach Anspruch 1 oder 2, dadurch gekennzeichnet, daß R² für einen geradkettigen Alkylenrest mit 1 - 5 und insbesondere 1 - 3 Kohlenstoffatomen, einen Sauerstoff enthaltenden Alkylenrest mit 2 - 4 Kohlenstoffatomen und insbesondere mit 4 Kohlenstoffatomen gemäß der Formel (̵CH₂)̵₂O(̵CH₂)̵₂, einen Cycloalkylenrest mit 6 - 10 Kohlenstoffatomen oder für einen Rest der Formel II steht.

4. Verbindungen nach einem oder mehreren der Ansprüche 1 bis 4, dadurch gekennzeichnet, daß die Summe aus a, b, c, d, e und f in Verbindungen der Formel I, in denen R² einen Rest der Formel II darstellt, 1 - 3 beträgt.

5. Verbindungen nach einem oder mehreren der Ansprüche 1 bis 4, dadurch gekennzeichnet, daß die Summe aus a, b, c, d, g und h in Verbindungen der Formel I, in denen R² einen Rest der Formel III darstellt, 1 - 2 beträgt.

6. Verbindungen nach einem oder mehreren der Ansprüche 1 bis 4, dadurch gekennzeichnet, daß die Summe aus a, b, c, d und k bzw. a, b, c, d und l in Verbindungen der Formel I, in denen R² einen Rest der Formeln IV oder V darstellt, 1 - 3 beträgt.

7. Verbindungen nach einem oder mehreren der Ansprüche 1 bis 4, dadurch gekennzeichnet, daß die Summe aus a, b, c und d in Verbindungen der Formel I, in denen R² die Bedeutung eines geradkettigen Alkylenrestes mit 1 - 8 Kohlenstoffatomen, eines Sauerstoff enthaltenden Alkylenrestes mit 2 - 6 Kohlenstoffatomen oder eines Cycloalkylenrestes mit 3 - 10 Kohlenstoffatomen hat, 2 - 4 beträgt.

8. Verbindungen nach einem oder mehreren der Ansprüche 1 - 7, dadurch gekennzeichnet, daß sich die Ammonium-Kationen [H-NR³R⁴R⁴]⁺ in der allgemeinen Formel I von sekundären oder tertiären Aminen NR³R⁴R⁴ ableiten, wobei R³ und R⁴ gleich oder verschieden sind und für C₁₈ - C₂₂-Alkyl-, substituierte oder unsubstituierte Phenyl- oder Cyclohexylreste stehen und R³ auch Wasserstoff bedeuten kann.

9. Verbindungen nach Anspruch 8, dadurch gekennzeichnet, daß die Ammonium-Kationen [H-N-R³R⁴R⁴]⁺ insgesamt 8 - 78, bevorzugt 12 - 72, besonders bevorzugt 21 - 60 und insbesondere 36 - 54 Kohlenstoffatome in den Resten R³ und R⁴ enthalten.

10. Verbindungen nach Anspruch 8, dadurch gekennzeichnet, daß sich die Ammonium-Kationen [H-NR³R⁴R⁴]⁺ von Di-2-ethylhexylamin, Tri-n-octylamin, Triisooctylamin, Triisononylamin, Triisodecylamin, Distearylamin, Methyldistearylamin, Tricetylamin oder Trieicosylamin ableiten.

11. Verfahren zur Herstellung der Verbindungen nach Anspruch 1, wobei R¹ ein Sulfonatrest ist, dadurch gekennzeichnet, daß man das sekundäre Phosphinoxid der Formel VI 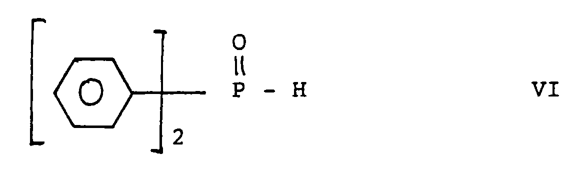 in Gegenwart einer Base mit einem Dihalogenid der Formel VII
X - R² - X VII
worin R² die in Anspruch 1 genannten Bedeutungen hat und X für einen Halogenrest, bevorzugt Chlor oder Brom steht, gegebenenfalls in Anwesenheit eines Lösungsmittels bei -20 bis 100°C zu einem Diphosphinoxid der Formel VIII 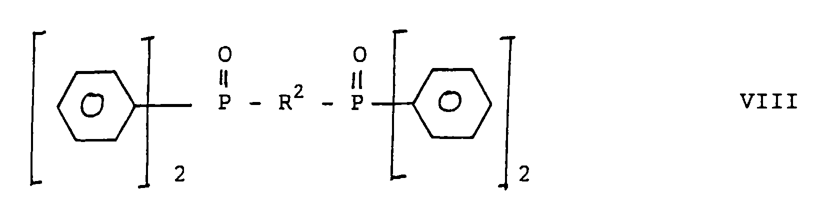 umsetzt, dieses Diphosphinoxid der Formel VIII gegebenenfalls in Gegenwart eines Lösungsmittels mit einem Silan der Formel HSiClₘR⁵ₙ, wobei m gleich 2 oder 3 ist, n gleich 0 oder 1 ist, m + n gleich 3 ist und R⁵ für einen Methyl- oder Phenylrest steht, bei 80 - 160°C zu einem Diphosphin der Formel IX 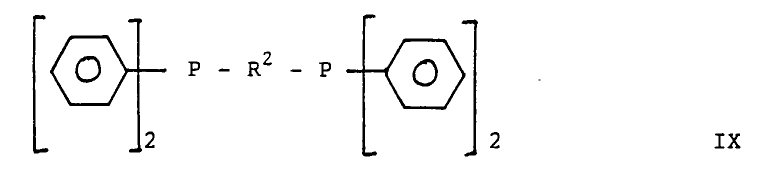 reduziert und dieses Diphosphin der Formel IX bei 0 bis 50°C mit Oleum sulfoniert, das Sulfonierungsgemisch mit Wasser verdünnt und das in einem wasserunlöslichen organischen Lösungsmittel gelöste wasserunlösliche Amin NR³R⁴R⁴, von dem sich das Ammonium-Kation [H-NR³R⁴R⁴]⁺ in Formel I ableitet, zugibt.

12. Verfahren nach Anspruch 11, dadurch gekennzeichnet, daß man die Sulfonierung des Diphosphins der Formel IX bei 0 - 50°C, bevorzugt 10 - 40°C, über 1 - 80 h, bevorzugt 6 - 72 h und insbesondere 10 - 60 h durchführt, zur Sulfonierung Oleum einsetzt, das 10 - 65 Gew.-%, bevorzugt 25 Gew.-% Schwefeltrioxid enthält, und je mol Diphosphin der Formel IX 5 bis 80, bevorzugt 15 bis 30 mol Schwefeltrioxid verwendet.

13. Verfahren nach Anspruch 11 oder 12, dadurch gekennzeichnet, daß man bei der Zugabe des in einem wasserunlöslichen organischen Lösungsmittel gelösten wasserunlöslichen Amins NR³R⁴R⁴ je Äquivalent Sulfonsäurereste 0,5 - 1,5 mol, bevorzugt 0,8 - 1,2 mol Amin NR³R⁴R⁴ verwendet und als Lösungsmittel für das Amin Toluol kerosinähnliche Kohlenwasserstofffraktionen, C₄ - C₂₀-Alkohole oder C₈ - C₂₀-Ether, einsetzt.
